# FASCICULE DE BREVET EUROPEEN

(11) **EP 3 339 145 B1**
(45) Date de publication et mention de la délivrance du brevet: **15.01.2020**
(21) Numéro de dépôt: 17206806.6
(22) Date de dépôt: 12.12.2017
(51) Int. Cl.: B62D 35/00

(54) **BECQUET POUR VÉHICULE AUTOMOBILE**
SPOILER FÜR KRAFTFAHRZEUG
SPOILER FOR AN AUTOMOBILE

(30) Priorité: 13.12.2016 FR 1662376
(43) Date de publication de la demande: 27.06.2018
(73) Titulaire: NOVARES France, 92140 Clamart (FR)
(72) Inventeur: CHENAUD, David, 01100 BELLIGNAT (FR)
(74) Mandataire: Delorme, Nicolas

(56) Documents cités:
- DE-A1-102014 203 957
- FR-A1- 2 988 367
- JP-A- 2011 105 045
- US-A1- 2006 108 830
- US-A1- 2010 026 045

## Description

On appelle becquet une pièce de carrosserie destinée à améliorer l'aérodynamisme arrière du véhicule sur lequel cette pièce est située, en utilisant la déportance aérodynamique pour plaquer le véhicule au sol. Les becquets sont également utilisés pour des aspects esthétiques du véhicule. Le becquet arrière est situé à l'arrière du véhicule. Il s'agit donc d'une pièce de carrosserie située entre le pavillon et la lunette. Le plus souvent, le becquet est situé sur la partie supérieure du hayon, à l'arrière du véhicule, juste au-dessus du bord supérieur de la lunette.

Traditionnellement, le becquet est fixé au hayon par des vis ou des boulons répartis sur deux zones : une zone de fixation à proximité du pavillon du véhicule et une zone de fixation à proximité de la lunette du véhicule. Un tel mode de fixation est notamment décrit dans les demandes de brevet US 2006/108830 A1 et US 2010/026045 A1.

Il est précisé, que dans le présent document, par pavillon, il est entendu le toit du véhicule ; et par lunette, il est entendu la vitre arrière du véhicule opposée au pare-brise.

La fixation par vis ou boulon présente une importante résistance à l'arrachement. Cependant, ce type de fixation impose de visser indépendamment chaque vis, ce qui augmente le temps d'assemblage d'un hayon muni d'un becquet. De plus, il est nécessaire d'encapsuler chaque vis pour étanchéifier la fixation du becquet au hayon. Cette manipulation augmente aussi le temps d'assemblage d'un hayon muni d'un becquet. En outre, la fixation par vis est une fixation discrète, la fixation est assurée ponctuellement par des vis ou des boulons répartis dans la zone de fixation. A l'usage, les variations de température tendent à déformer les becquets réalisés en matière plastique. Or, dans la zone de fixation à proximité du pavillon, le becquet en matière plastique se déforme entre les points de fixation, créant ainsi des retassures ou des vagues qui en altèrent l'esthétique.

Dans ce contexte technique, la présente invention a pour objectif de fournir un becquet qui puisse être fixé rapidement à un hayon et dont la zone de fixation à proximité du pavillon soit exempte de vagues ou de retassures.

Selon une définition générale, l'invention concerne un becquet comprenant, une peau présentant une surface extérieure d'aspect et une surface intérieure, une doublure de maintien fixée sur la surface intérieure de la peau, et des moyens de fixation permettant de fixer le becquet à un hayon dans une région proche d'une lunette, dits moyens de fixation coté lunette, et des moyens de fixation permettant de fixer le becquet au hayon dans une région proche d'un pavillon, dits moyens de fixation coté pavillon. Les moyens de fixation coté pavillon comprennent au moins un profilé continu comprenant une gorge d'encliquetage adaptée pour coopérer avec des moyens d'encliquetage du hayon. Le profilé est fixé en continu à la surface intérieure de la peau.

La gorge d'encliquetage permet de fixer rapidement le becquet au hayon et permet ainsi de diminuer le temps d'assemblage d'un hayon comprenant un becquet, par rapport aux dispositifs de l'art antérieur. De plus, la fixation en continu du profilé à la peau du becquet empêche l'apparition de vagues et de retassures liées à une alternance de zones fixées et de zones libres. En outre, la fixation du profilé à la peau permet au becquet selon l'invention de présenter une doublure de maintien de dimension réduite par rapport aux becquets de l'art antérieur dont la doublure comprend l'ensemble des moyens de fixation. Cette disposition technique permet d'alléger le becquet et d'en réduire le coût de fabrication.

Les moyens de fixation coté pavillon peuvent comprendre au moins une lèvre d'étanchéité permettant d'assurer l'étanchéité entre le becquet et le pavillon.

La lèvre d'étanchéité peut être coextrudée avec le profilé.

La gorge peut présenter une lèvre interne permettant d'assurer la tenue mécanique et l'étanchéité avec les moyens d'encliquetage du hayon et de diminuer les efforts d'encliquetage du hayon lors du montage sur un véhicule.

Le profilé peut présenter une surface plane adaptée pour recevoir un élément adhésif pour coller en continu le profilé à la surface intérieure de la peau du becquet.

Le collage en continu du profilé permet au profilé d'être fixé en continu à la peau et permet d'assembler rapidement le profilé à la peau.

La doublure de maintien peut comprendre les moyens de fixation coté lunette.

Les moyens de fixation coté lunette peuvent comprendre au moins un taraudage de la doublure de maintien adapté pour recevoir une vis de fixation.

Ainsi, le becquet selon l'invention peut présenter des moyens de fixation mixtes : le profilé continu et encliquetable coté pavillon, et un assemblage par vis coté lunette. Cette disposition technique permet au becquet selon l'invention de combiner les avantages du profilé avec les qualités de résistance à l'arrachement de la fixation par vis.

La présente invention concerne aussi un hayon qui comprend un becquet selon l'invention. Le hayon comprend des moyens d'encliquetage qui comprennent une nervure adaptée pour être encliquetée dans la gorge.

La nervure peut présenter une géométrie en harpon adaptée pour verrouiller l'encliquetage de la nervure dans la gorge.

La géométrie en harpon permet d'augmenter la résistance à l'arrachement de la liaison encliquetée entre la nervure et la gorge.

La nervure peut être venue de moulage avec le hayon. Cette disposition technique permet de réduire le temps et le coût de fabrication du hayon.

D'autres caractéristiques et avantages de la présente invention ressortiront clairement de la description détaillée ci-après d'un mode de réalisation, donné à titre d'exemple non limitatif, en référence aux dessins annexés dans lesquels :
- la figure 1 est une vue en perspective d'un becquet selon l'invention,
- la figure 2 est une vue en coupe transversale des moyens de fixation coté pavillon d'un becquet et d'un hayon, selon l'invention,

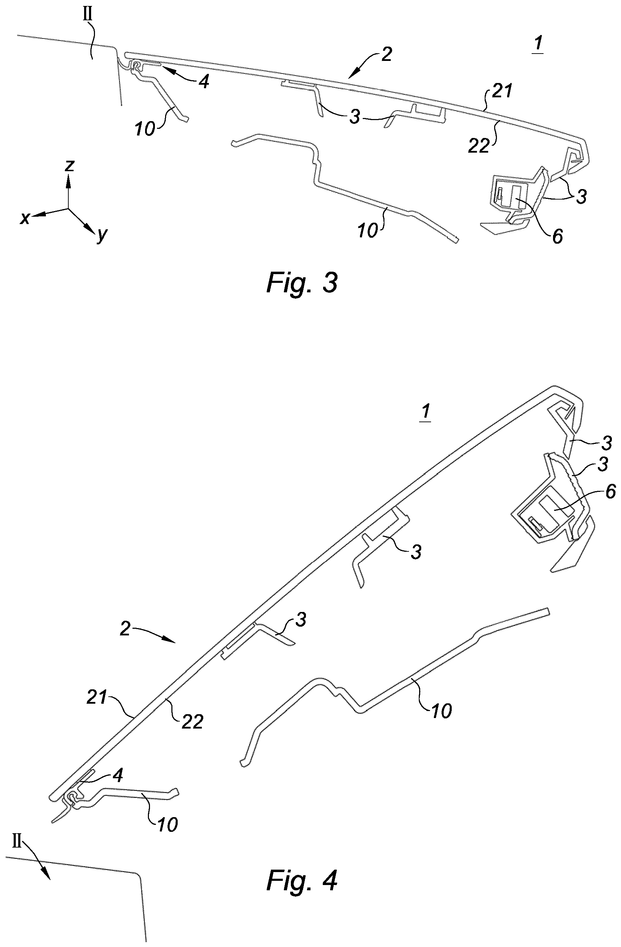

- la figure 3 est une vue en coupe transversale d'un becquet selon l'invention, positionné sur un hayon fermé,
- la figure 4 est une vue en coupe transversale d'un becquet selon l'invention, positionné sur un hayon ouvert.

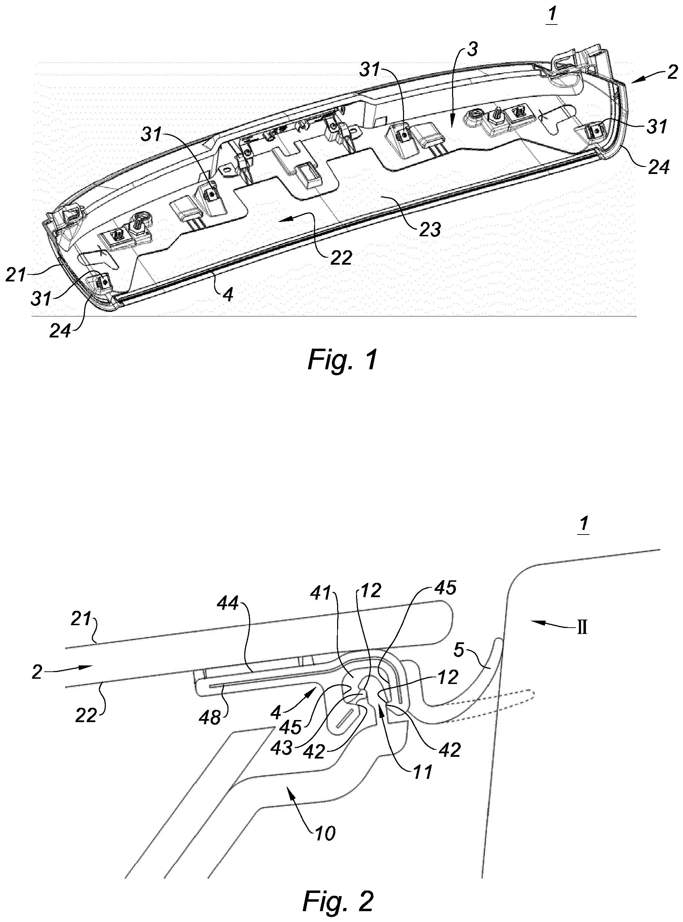

En référence à la figure 1, l'invention concerne un becquet 1. Le becquet 1 comprend une peau 2 qui présente une surface extérieure 21 d'aspect et une surface intérieure 22. La peau 2 peut, par exemple, être réalisée en matériau plastique ou en aluminium. La surface extérieure 21 est colorée en fonction des nécessités d'aspect du becquet 1. La peau 2 présente une portion centrale 23 faiblement incurvée et deux extrémités incurvées 24. Selon l'exemple ici présenté, la portion centrale présente une largeur sensiblement équivalente à 1 mètre et une longueur sensiblement équivalente à 30 centimètres, dans un repère XYZ lié au véhicule.

Une doublure de maintien 3 est fixée à la surface intérieure 22. La doublure de maintien 3 permet notamment de rigidifier la peau 2. La doublure de maintien 3 peut, par exemple, être réalisée en matériau plastique ou en aluminium.

Des écrous 31 permettent de fixer la peau 2 sur la doublure de maintien 3.

En outre, le becquet 1 comprend des moyens de fixation permettant de fixer le becquet 1 à un hayon 10 dans une région proche d'une lunette, dits moyens de fixation coté lunette, et des moyens de fixation permettant de fixer le becquet 1 au hayon 10 dans une région proche d'un pavillon II, dits moyens de fixation coté pavillon II.

Les moyens de fixation coté pavillon II comprennent un profilé 4 continu. Le profilé 4 est fixé en continu à la surface intérieure 22 de la peau 2.

Le profilé 4 présente une surface plane 44 adaptée pour recevoir un élément adhésif pour coller en continu le profilé 4 à la surface intérieure 22 de la peau 2 du becquet 1. Le collage peut être assuré, par exemple, par un adhésif double face ou un cordon de colle déposé in situ du type polyuréthane bi-composant ou thermofusible.

Le collage en continu du profilé 4 permet de réaliser une fixation linéaire et permet également d'assembler rapidement le profilé 4 à la peau 2.

En référence à la figure 2, le profilé 4 comprend une gorge 41 d'encliquetage adaptée pour coopérer avec des moyens d'encliquetage du hayon 10.

La gorge 41 présente une forme générale en U délimitée par deux parois parallèles 45. Deux retours 42 sont positionnés, en vis-à-vis, chacun sur une paroi parallèle 45 de la gorge 41. Tel que cela sera détaillé ultérieurement, les retours 42 sont adaptés pour coopérer avec les moyens d'encliquetage du hayon 10.

La gorge 41 peut comprendre une âme de renfort 48.

La gorge 41 permet de fixer rapidement le becquet 1 au hayon 10 et permet ainsi de diminuer le temps d'assemblage d'un hayon 10 comprenant un becquet 1, par rapport aux dispositifs de l'art antérieur. De plus, la fixation en continu du profilé 4 à la peau 2 du becquet 1 empêche l'apparition de vagues et de retassures liées à une alternance de zones fixées et de zones libres. En outre, la fixation du profilé 4 à la peau 2 permet au becquet 1 selon l'invention de présenter une doublure de maintien 3 de dimension réduite par rapport aux becquets 1 de l'art antérieur dont la doublure comprend l'ensemble des moyens de fixation et de ce fait présente une superposition sur l'ensemble de la surface intérieure de la peau. Cette disposition technique permet d'alléger le becquet 1 et d'en réduire le coût de fabrication.

La gorge 41 présente une lèvre interne 43 qui permet d'assurer la tenue mécanique et l'étanchéité avec les moyens d'encliquetage du hayon 10. La lèvre interne 43 peut être réalisée dans un matériau élastomère.

De plus, les moyens de fixation coté pavillon comprennent une lèvre d'étanchéité 5 permettant d'assurer l'étanchéité entre le becquet et le pavillon. Selon le mode de réalisation ici présenté, la lèvre d'étanchéité 5 est coextrudée avec le profilé 4.

La doublure de maintien 3 comprend les moyens de fixation coté lunette.

Les moyens de fixation coté lunette comprennent des taraudages 6 de la doublure de maintien 3 adaptés pour recevoir chacun des vis de fixation.

Ainsi, le becquet 1 présente des moyens de fixation mixtes : le profilé 4 continu et encliquetable coté pavillon, et un assemblage par vis coté lunette. Cette disposition technique permet au becquet 1 de combiner les avantages du profilé 4 avec les qualités de résistance à l'arrachement de la fixation par vis.

La présente invention concerne aussi un hayon 10 qui comprend un becquet 1. Le hayon 10 comprend des moyens d'encliquetage qui comprennent une nervure 11 adaptée pour être encliquetée dans la gorge 41.

La nervure 11 présente une géométrie en harpon adaptée pour verrouiller l'encliquetage de la nervure 11 dans la gorge 41. Ainsi, la nervure 11 présente deux épaulements 12 décalés l'un par rapport à l'autre.

Lors de l'assemblage, la nervure 11 pénètre dans la gorge 41 et déforme la lèvre intérieure 43 qui est alors élastiquement contrainte. La lèvre intérieure 43 est en appui contre l'un des deux épaulements 12. Par effet de retour élastique, la lèvre intérieure 43 tend à appuyer le deuxième épaulement 12 contre l'un des retours 42 de la gorge 41. La déformation élastique de la lèvre intérieure 43 permet aussi d'absorber les vibrations lors du roulage du véhicule, diminuant ainsi d'éventuels bruits parasites.

Ainsi, la nervure 11 est adaptée pour coopérer avec les retours 42 de la gorge 41, pour permettre la liaison par encliquetage et en augmenter la résistance à l'arrachement.

Selon l'exemple ici présenté, la nervure 11 est venue de moulage avec le hayon 10. Cette disposition technique permet de réduire le temps et le coût de fabrication du hayon 10.

Ainsi, l'invention fournit un becquet 1 qui peut être fixé rapidement à un hayon 10 et dont la zone de fixation à proximité du pavillon II est exempte de vagues ou de retassures.

Bien entendu, l'invention ne se limite pas à la seule forme d'exécution du dispositif décrite ci-dessus à titre d'exemple, elle embrasse au contraire toutes les variantes de réalisation suivant les revendications.

## Revendications

1. Becquet (1) comprenant, une peau (2) présentant une surface extérieure (21) d'aspect et une surface intérieure (22), une doublure de maintien (3) fixée sur la surface intérieure (22) de la peau (2), et des moyens de fixation permettant de fixer le becquet (1) à un hayon (10) dans une région proche d'une lunette, dits moyens de fixation coté lunette, et des moyens de fixation permettant de fixer le becquet (1) au hayon (10) dans une région proche d'un pavillon (II), dits moyens de fixation coté pavillon (II), **caractérisé en ce que** les moyens de fixation coté pavillon (II) comprennent au moins un profilé (4) continu comprenant une gorge (41) d'encliquetage adaptée pour coopérer avec des moyens d'encliquetage du hayon (10), le profilé (4) étant fixé en continu à la surface intérieure (22) de la peau (2).

2. Becquet (1) selon la revendication 1, **caractérisé en ce que** les moyens de fixation coté pavillon (II) comprennent au moins une lèvre d'étanchéité (5) permettant d'assurer l'étanchéité entre le becquet (1) et le pavillon (II).

3. Becquet (1) selon l'une quelconque des revendications 1 ou 2, **caractérisé en ce que** la lèvre d'étanchéité (5) est coextrudée avec le profilé (4).

4. Becquet (1) selon l'une quelconque des revendications 1 à 3, **caractérisé en ce que** la gorge (41) présente une lèvre interne (43) permettant d'assurer la tenue mécanique et l'étanchéité avec les moyens d'encliquetage du hayon (10) et de diminuer les efforts d'encliquetage du hayon (10) lors du montage sur un véhicule.

5. Becquet (1) selon l'une quelconque des revendications 1 à 4, **caractérisé en ce que** le profilé (4) présente une surface plane (44) adaptée pour recevoir un élément adhésif pour coller en continu le profilé (4) à la surface intérieure (22) de la peau (2) du becquet (1).

6. Becquet (1) selon l'une quelconque des revendications 1 à 5, **caractérisé en ce que** la doublure de maintien (3) comprend les moyens de fixation coté lunette.

7. Becquet (1) selon la revendication 6 **caractérisé en ce que** les moyens de fixation coté lunette comprennent au moins un taraudage (6) de la doublure de maintien (3) adapté pour recevoir une vis de fixation.

8. Hayon (10) **caractérisé en ce qu'**il comprend un becquet (1) selon l'une quelconque des revendications 1 à 7, le hayon (10) comprenant des moyens d'encliquetage qui comprennent une nervure (11) adaptée pour être encliquetée dans la gorge (41).

9. Hayon (10) selon la revendication 8, **caractérisé en ce que** la nervure (11) présente une géométrie en harpon adaptée pour verrouiller l'encliquetage de la nervure dans la gorge (41).

10. Hayon (10) selon l'une quelconque des revendications 8 ou 9, **caractérisé en ce que** la nervure (11) est venue de moulage avec le hayon (10).

## Patentansprüche

1. Spoiler (1), umfassend eine Haut (2), die eine sichtbare äußere Oberfläche (21) und eine innere Oberfläche (22) aufweist, eine Halteauskleidung (3), die auf der inneren Oberfläche (22) der Haut (2) befestigt ist, und Befestigungsmittel, die es ermöglichen, den Spoiler (1) an einer Heckklappe (10) in einem Bereich nahe einer Heckscheibe, Befestigungsmittel auf Seiten der Heckscheibe genannt, zu befestigen, und Befestigungsmittel, die es ermöglichen, den Spoiler (1) an der Heckklappe (10) in einem Bereich nahe einem Dach (II), Befestigungsmittel auf Seiten des Daches (II) genannt, zu befestigen, **dadurch gekennzeichnet, dass** die Befestigungsmittel auf Seiten des Daches (II) mindestens ein durchgehendes Profil (4) umfassen, das eine Einrastnut (41) umfasst, die ausgeführt ist, um mit den Einrastmitteln der Heckklappe (10) zusammenzuwirken, wobei das Profil (4) durchgehend auf der inneren Oberfläche (22) der Haut (2) befestigt ist.

2. Spoiler (1) nach Anspruch 1, **dadurch gekennzeichnet, dass** die Befestigungsmittel auf Seiten des Daches (II) mindestens eine Dichtlippe (5) umfassen, die es ermöglichen, für die Dichtheit zwischen dem Spoiler (1) und dem Dach (II) zu sorgen.

3. Spoiler (1) nach einem der Ansprüche 1 oder 2, **dadurch gekennzeichnet, dass** die Dichtlippe (5) mit dem Profil (4) gemeinsam extrudiert ist.

4. Spoiler (1) nach einem der Ansprüche 1 bis 3, **dadurch gekennzeichnet, dass** die Nut (41) eine innere Lippe (43) aufweist, die es ermöglicht, für den mechanischen Halt und die Dichtheit mit den Einrastmitteln der Heckklappe (10) zu sorgen, und die Einrastkräfte der Heckklappe (10) bei der Montage auf einem Fahrzeug zu verringern.

5. Spoiler (1) nach einem der Ansprüche 1 bis 4, **dadurch gekennzeichnet, dass** das Profil (4) eine ebene Oberfläche (44) aufweist, die ausgeführt ist, um ein Haftelement aufzunehmen, um das Profil (4) durchgehend auf die innere Oberfläche (22) der Haut (2) des Spoilers (1) zu kleben.

6. Spoiler (1) nach einem der Ansprüche 1 bis 5, **dadurch gekennzeichnet, dass** die Halteauskleidung (3) die Befestigungsmittel auf Seiten der Heckscheibe umfasst.

7. Spoiler (1) nach Anspruch 6, **dadurch gekennzeichnet, dass** die Befestigungsmittel auf Seiten der Heckscheibe mindestens ein Innengewinde (6) der Halteauskleidung (3) umfassen, das ausgeführt ist, um eine Befestigungsschraube aufzunehmen.

8. Heckklappe (10), **dadurch gekennzeichnet, dass** sie einen Spoiler (1) nach einem der Ansprüche 1 bis 7 umfasst, wobei die Heckklappe (10) die Einrastmittel umfasst, die eine Rippe (11) umfassen, die ausgeführt ist, um in die Nut (41) eingerastet zu werden.

9. Heckklappe (10) nach Anspruch 8, **dadurch gekennzeichnet, dass** die Rippe (11) eine Geometrie einer Harpune aufweist, die ausgeführt ist, um das Einrasten der Rippe in der Nut (41) zu verriegeln.

10. Heckklappe (10) nach einem der Ansprüche 8 oder 9, **dadurch gekennzeichnet, dass** die Rippe (11) gemeinsam mit der Heckklappe (10) gussgeformt ist.

## Claims

1. A spoiler (1) comprising, a skin (2) having an external trim surface (21) and an internal surface (22), a holding lining (3) fastened on the internal surface (22) of the skin (2), and fastening means allowing fastening the spoiler (1) to a hatchback (10) in a region close to a back window, called back window side fastening means, and fastening means allowing fastening the spoiler (1) to the hatchback (10) in a region close to a roof (II), called roof side (II) fastening means, **characterized in that** the roof side (II) fastening means comprise at least one continuous profile (4) comprising a snap-fit groove (41) adapted to cooperate with snap-fitting means of the hatchback (10), the profile (4) being continuously fastened to the internal surface (22) of the skin (2).

2. The spoiler (1) according to claim 1, **characterized in that** the roof side (II) fastening means comprise at least one sealing lip (5) allowing ensuring sealing between the spoiler (1) and the roof (II).

3. The spoiler (1) according to any one of claims 1 or 2, **characterized in that** the sealing lip (5) is coextruded with the profile (4).

4. The spoiler (1) according to any one of claims 1 to 3, **characterized in that** the groove (41) has an inner lip (43) allowing ensuring the mechanical strength and the sealing with the snap-fitting means of the hatchback (10) and reducing the snap-fitting forces of the hatchback (10) when mounting on a vehicle.

5. The spoiler (1) according to any one of claims 1 to 4, **characterized in that** the profile (4) has a planar surface (44) adapted to receive an adhesive element to continuously glue the profile (4) to the internal surface (22) of the skin (2) of the spoiler (1).

6. The spoiler (1) according to any one of claims 1 to 5, **characterized in that** the holding lining (3) comprises the back window side fastening means.

7. The spoiler (1) according to claim 6 **characterized in that** the back window side fastening means comprise at least one thread (6) of the holding lining (3) adapted to receive a fastening screw.

8. A hatchback (10) **characterized in that** it comprises a spoiler (1) according to any one of claims 1 to 7, the hatchback (10) comprising snap-fitting means which comprise a rib (11) adapted to be snap-fitted into the groove (41).

9. The hatchback (10) according to claim 8, **characterized in that** the rib (11) has a harpoon-like geometry adapted to lock the snap-fit of the rib into the groove (41).

10. The hatchback (10) according to any one of claims 8 or 9, **characterized in that** the rib (11) is integrally molded with the hatchback (10).
